# EUROPEAN PATENT APPLICATION

(11) **EP 3 920 259 A1**
(43) Date of publication of application: **08.12.2021**
(21) Application number: 19921272.1
(22) Date of filing: 20.12.2019
(51) Int. Cl.: H01M 2/10

(54) **BATTERY MODULE AND POWER BATTERY PACK**

(30) Priority: 25.03.2019 CN 201910228427
(71) Applicant: Huawei Technologies Co., Ltd., Shenzhen, Guangdong 518129 (CN)
(72) Inventor: CHEN, Jun, Shenzhen, Guangdong 518129 (CN)
(74) Representative: MERH-IP Matias Erny Reichl Hoffmann Patentanwälte PartG mbB
(86) International application number: PCT/CN2019/126881
(87) International publication number: WO 2020/192196

(57) **Abstract**

A battery module (10) and a power battery pack including the battery module (10) are provided. The battery module (10) includes a plurality of battery cells (11) and an enclosure frame structure (12) for fastening the plurality of battery cells (11). The enclosure frame structure (12) includes two side plates (121) that are disposed opposite to each other and two end plates (122) that are disposed opposite to each other, at least one of the side plates (121) is a liquid cooling plate, and a difference between a maximum distance and a minimum distance from the liquid cooling plate to the plurality of battery cells (11) is less than a preset threshold. Because the enclosure frame structure (12) includes the liquid cooling plate, the enclosure frame structure (12) can not only fasten the battery cells (11), but also implement heat dissipation for the battery cells (11) in the battery module (10).

## Description

This application claims priority to Chinese Patent Application No. 201910228427.X, filed with the China National Intellectual Property Administration on March 25, 2019 and entitled "BATTERY MODULE AND POWER BATTERY PACK", which is incorporated herein by reference in its entirety.

### TECHNICAL FIELD

This application relates to the battery field, and in particular, to a battery module and a power battery pack.

### BACKGROUND

A power battery refers to a power supply that provides a power source for an electric device. At present, power batteries have been widely used in electric vehicles such as electric cars, electric trains, electric bicycles, and golf carts. The power battery has high energy density, and a temperature rises when the power battery works. Therefore, heat dissipation needs to be implemented for the power battery, to ensure normal operation of the battery.

A conventional technology provides a power battery pack. The power battery pack includes a plurality of battery modules, a heat dissipation plate, and a housing. In the power battery pack, the heat dissipation plate is disposed at the bottom of the plurality of battery modules, and is configured to dissipate heat for battery cells in the battery modules.

To further improve energy density of the power battery pack, the heat dissipation plate is usually thinned and lightened. However, thinning and lightening the heat dissipation plate reduces a heat dissipation effect of the battery cells, and a temperature of the power battery pack can hardly meet a requirement.

### SUMMARY

In view of this, a first aspect of this application provides a battery module, including a plurality of battery cells and an enclosure frame structure for fastening the plurality of battery cells. The enclosure frame structure includes two side plates that are disposed opposite to each other and two end plates that are disposed opposite to each other, at least one of the side plates is a liquid cooling plate, and a difference between a maximum distance and a minimum distance from the liquid cooling plate to the plurality of battery cells is less than a preset threshold. Distances from the liquid cooling plate to the battery cells may be equal or approximately equal. Because the distances from the liquid cooling plate to the battery cells are equal or approximately equal, the liquid cooling plate can evenly dissipate heat for the plurality of battery cells in the battery module, thereby achieving a good heat dissipation effect. When both the side plates are liquid cooling plates, a cooling effect can be further improved.

In another possible implementation, at least one liquid cooling channel is disposed in the liquid cooling plate, and the liquid cooling channel includes a coolant inlet located at an upper portion of the liquid cooling plate and a coolant outlet located at a lower portion of the liquid cooling plate. Optionally, the liquid cooling channel includes a coolant inlet located at a lower portion of the liquid cooling plate and a coolant outlet located at an upper portion of the liquid cooling plate.

In another possible implementation, at least one liquid cooling channel is disposed in the liquid cooling plate, and a coolant inlet and a coolant outlet in the liquid cooling channel are located on a same horizontal plane.

Optionally, the liquid cooling plate is made by using a single-sided blowing process. Alternatively, the liquid cooling plate is made by using a stamping and welding process. Optionally, a thickness of the liquid cooling plate is 1 to 2 mm. The liquid cooling plate made in this way is light, thin, and strong, and has good feasibility. Optionally, the liquid cooling plate is a metal plate or an alloy plate, for example, an aluminum alloy plate.

In another possible implementation, a thermally conductive pad is disposed between the liquid cooling plate and the plurality of battery cells. Alternatively, thermally conductive silicone or thermally conductive gel is filled between the liquid cooling plate and the plurality of battery cells. The thermally conductive pad, the thermally conductive silicone, or the thermally conductive gel has good thermal conductivity, and can enable the liquid cooling plate to be in good thermal contact with the battery cells. This improves the cooling effect.

In another possible implementation, each of the side plates is fastened to the two adjacent end plates through welding. Alternatively, each of the side plates is fastened to the two adjacent end plates through riveting. In this way, a firm enclosure frame structure can be formed. The enclosure frame structure is not easy to deform and can fasten a plurality of battery cells.

A second aspect provides a power battery pack, including at least one battery module and a housing. The battery module is the battery module according to any one of the first aspect or the possible implementations of the first aspect. The housing is configured to package the at least one battery module. Because the battery module can dissipate heat, there is no need to dispose an additional liquid cooling plate at the bottom of the battery module in the power battery pack. Therefore, a height of the power battery pack may be reduced, a weight of the power battery pack may be reduced, and energy density of the power battery pack may be improved.

In a possible implementation, the housing includes a box and a top cover.

### BRIEF DESCRIPTION OF DRAWINGS

FIG. 1 is a schematic diagram of a battery module according to this application;
FIG. 2 is another schematic diagram of a battery module according to this application;
FIG. 3a is a schematic cross-sectional diagram of a liquid cooling plate according to this application;
FIG. 3b is another schematic cross-sectional diagram of a liquid cooling plate according to this application;
FIG. 3c is another schematic cross-sectional diagram of a liquid cooling plate according to this application;
FIG. 3d is another schematic cross-sectional diagram of a liquid cooling plate according to this application;
FIG. 3e is another schematic cross-sectional diagram of a liquid cooling plate according to this application; and
FIG. 4 is an exploded diagram of a housing of a power battery pack according to this application.

### DESCRIPTION OF EMBODIMENTS

To make the technical solutions in the embodiments of this application more comprehensible, the following clearly and completely describes the technical solutions in the embodiments of this application with reference to the accompanying drawings in the embodiments of this application. Apparently, the described embodiments are merely some but not all of the embodiments of this application. All other embodiments obtained by a person of ordinary skill in the art based on the embodiments of this application without creative efforts shall fall within the protection scope of this application.

In the conventional technology, a power battery pack includes a plurality of battery modules, a protective circuit board, a heat dissipation plate, and a housing.

The battery module includes a plurality of battery cells and a fastener. Battery cells are also referred to as single-cell batteries. In the battery module, the plurality of battery cells may be connected in series and/or in parallel. To ensure energy density of the battery module, the plurality of battery cells (such as square battery cells) may be closely arranged together. For example, 4 to 12 square battery cells are closely arranged. The fastener fastens the plurality of battery cells.

The protective circuit board is electrically connected to the battery cells in the battery module. When some battery cells become faulty, the protective circuit board can control on/off of a circuit, thereby protecting other battery cells. For example, when overcharge, overdischarge, overcurrent, a short circuit, ultra-high temperature charging and discharging, or the like occurs in a circuit of the protective circuit board, the protective circuit board can determine that a fault occurs in a battery cell, and isolate the faulty battery cell, and a normal battery cell can continue to work. Alternatively, the protective circuit board can further isolate a faulty battery module from other battery modules.

The heat dissipation plate is disposed at the bottom of the plurality of battery modules, and is configured to dissipate heat for battery cells in the battery modules.

The housing is configured to package the plurality of battery modules.

When a volume and a weight of the power battery pack are strictly limited, a driving distance of an electric vehicle depends mainly on energy density of the power battery pack. It can be learned from the background description that the heat dissipation plate in the power battery pack occupies space of the power battery pack, increases the weight of the power battery pack, and affects the energy density of the power battery pack.

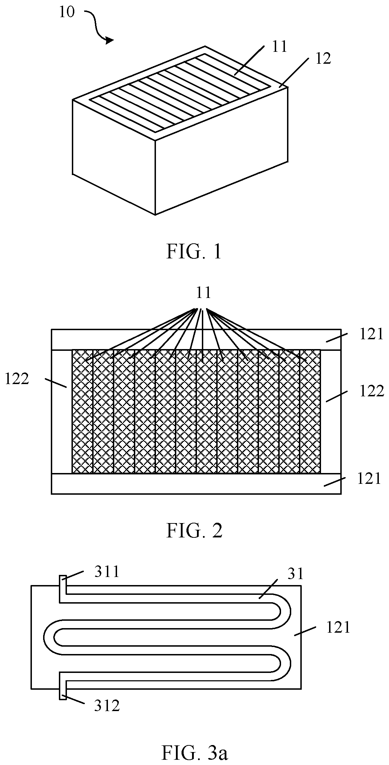

This application provides a battery module having a liquid cooling plate, which can dissipate heat for the battery module, and there is no need to dispose an additional liquid cooling plate at the bottom of the battery module to dissipate heat for the battery module. The following specifically describes the battery module in this application by using an embodiment. Referring to FIG. 1, an embodiment of a battery module 10 provided in this application includes:
a plurality of battery cells 11 and an enclosure frame structure 12 for fastening the plurality of battery cells 11.

As shown in FIG. 2, the enclosure frame structure 12 includes two side plates 121 that are disposed opposite to each other and two end plates 122 that are disposed opposite to each other, at least one of the side plates 121 is a liquid cooling plate, and a difference between a maximum distance and a minimum distance from the liquid cooling plate to the plurality of battery cells 11 is less than a preset threshold.

In this embodiment, the battery cell 11 may be, but is not limited to, a rechargeable battery such as a lithium polymer battery, a lithium-ion battery, a lead acid battery, a nickel-cadmium battery, or a nickel-metal hydride battery. The battery cell 11 is a strip-shaped battery cell or a plate-shaped battery cell, and the plurality of battery cells 11 may be closely arranged together, as shown in FIG. 1. The battery module shown in FIG. 1 includes 12 battery cells. It may be understood that a quantity of battery cells is merely an example, and the quantity of battery cells in the battery module may be greater than 12, or may be less than 12. A quantity of battery cells in one battery module is not specifically limited in this application. A plurality of battery cells in one battery module may be battery cells of a same type.

In the enclosure frame structure 12, each of the side plates 121 may be fastened to the two adjacent end plates 122 through welding, or each of the side plates 121 is fastened to the two adjacent end plates 122 through riveting. The side plates 121 and the end plates 122 can fasten and protect the plurality of battery cells 11. It should be noted that, during manufacturing of the battery module 10, the plurality of battery cells 11 may be first clamped by using the two end plates 122, and then the two end plates 122 and the two side plates 121 may be separately fastened. In this way, the plurality of battery cells 11 and the enclosure frame structure 12 can form the whole through friction between the end plates 122 and the battery cells 11 and friction between the plurality of battery cells 11, thereby facilitating movement.

In the enclosure frame structure 12, one side plate 121 is a liquid cooling plate, or both the side plates 121 are liquid cooling plates.

The liquid cooling plate is a plate in which a liquid cooling channel is disposed. When working, the battery cells 11 generate heat, causing temperatures of the battery cells 11 and the enclosure frame structure 12 to rise. When coolant flows through the liquid cooling channel, the temperatures of the enclosure frame structure 12 and the battery cells 11 can be lowered, thereby keeping the battery cells 11 from overheating.

The liquid cooling plate is disposed on sides of the plurality of battery cells 11, and a difference between a maximum distance and a minimum distance from the liquid cooling plate to the plurality of battery cells 11 is less than a preset threshold. In practical application, there may be a slight difference in a distance from the liquid cooling plate to each battery cell 11 in the battery module, for example, a difference caused by tolerances of battery cell sizes. A value of the preset threshold may be set based on an actual situation.

Because distances from the liquid cooling plate to different battery cells 11 in the battery module are equal or approximately equal, the liquid cooling plate can simultaneously dissipate heat for all or some of the battery cells 11, thereby playing a role of uniform heat dissipation. A surface that is of the liquid cooling plate and that is close to the battery cells 11 may be a plane, to lean close to the battery cells 11.

It may be understood that when both the side plates 121 are liquid cooling plates, a heat transfer distance is portion a width of the battery cell. In the conventional technology, when a heat dissipation plate is disposed at the bottom of the battery module, the heat transfer distance is a height of the battery cell. Because a height of a common battery cell is greater than portion a width of the battery cell, when both the side plates 121 are liquid cooling plates, the heat transfer distance is shorter, and a heat dissipation effect is better.

A case in which the side plate 121 is a liquid cooling plate is described in detail below. Referring to FIG. 3a, in an optional embodiment, a liquid cooling channel 31 is disposed in the liquid cooling plate, and the liquid cooling channel 31 includes a coolant inlet 311 located at an upper portion of the liquid cooling plate and a coolant outlet 312 located at a lower portion of the liquid cooling plate. Specifically, the coolant inlet 311 may alternatively be disposed at the top of the liquid cooling plate, and the coolant outlet 312 may alternatively be disposed at the bottom of the liquid cooling plate. Alternatively, the coolant inlet 311 is a protruding duct formed at the top of the liquid cooling plate, and the coolant outlet 312 is a protruding duct formed at the bottom of the liquid cooling plate. In this way, coolant can flow from top to bottom without additional external force, thereby taking away heat generated by the battery cells 11. Alternatively, the coolant inlet 311 is located at the lower portion of the liquid cooling plate, and the coolant outlet 312 is located at the upper portion of the liquid cooling plate.

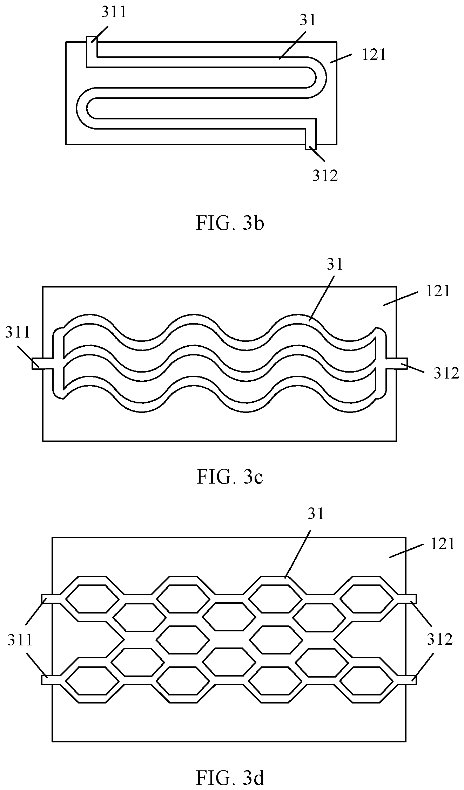

It may be understood that the coolant inlet 311 and the coolant outlet 312 may be located on a same side of the liquid cooling plate. For example, both the coolant inlet 311 and the coolant outlet 312 are located on a left side of the liquid cooling plate, as shown in FIG. 3a. Alternatively, both the coolant inlet 311 and the coolant outlet 312 are located on a right side of the liquid cooling plate. The coolant inlet 311 and the coolant outlet 312 may alternatively be located on different sides of the liquid cooling plate. For example, the coolant inlet 311 is located on the left side of the liquid cooling plate, and the coolant outlet 312 is located on the right side of the liquid cooling plate, as shown in FIG. 3b.

Referring to FIG. 3c, in another optional embodiment, at least one liquid cooling channel 31 is disposed in the liquid cooling plate, and a coolant inlet 311 and a coolant outlet 312 in the liquid cooling channel 31 are located on a same horizontal plane.

A shape of the liquid cooling channel 31 may affect a flow speed of the coolant, thereby affecting the heat dissipation effect. The shape of the liquid cooling channel 31 may be, but is not limited to, a curved line shape, a straight line shape, a folded line shape, or an olive shape. When the liquid cooling channel 31 is a straight duct, the flow speed of the coolant in the liquid cooling channel 31 is relatively high. When the liquid cooling channel 31 is a curved duct or a folded-line duct, the flow speed of the coolant in the liquid cooling channel 31 is relatively low.

The liquid cooling plate may include a plurality of coolant inlets and a plurality of coolant outlets. As shown in FIG. 3d, the liquid cooling plate includes two coolant inlets 311 and two coolant outlets 312. The liquid cooling channel 31 shown in FIG. 3d has a flow disturbance effect, so that the heat dissipation effect can be further improved.

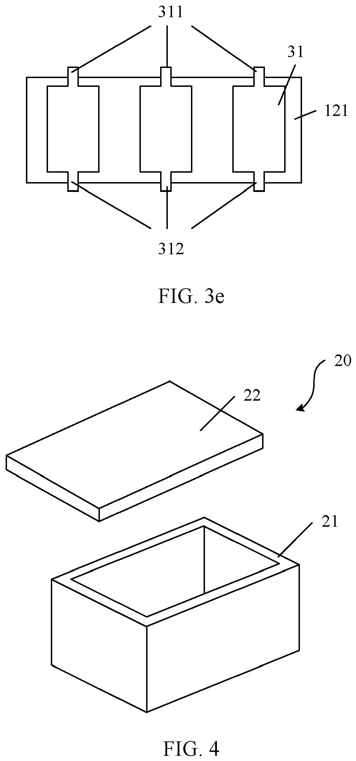

It should be noted that there may alternatively be a plurality of liquid cooling channels. As shown in FIG. 3e, the liquid cooling plate includes three liquid cooling channels 31, and each liquid cooling channel 31 includes a coolant inlet 311 and a coolant outlet 312. The coolant inlet 311 is located at an upper part of the liquid cooling plate, and the coolant outlet 312 is located at a lower part of the liquid cooling plate.

Optionally, the liquid cooling plate may be a metal plate or an alloy plate. For example, the liquid cooling plate may be, but is not limited to, an aluminum plate, a steel plate, an aluminum alloy plate, a stainless steel plate, or the like. A thickness of the liquid cooling plate may be greater than 3 mm or less than 1 mm

Optionally, the liquid cooling plate may be made by using a single-sided blowing process, or made by using a stamping and welding process. In this way, a liquid cooling plate having a thickness of 1 to 2 mm may be made. Compared with a liquid cooling plate whose thickness is greater than 3 mm, such a liquid cooling plate is lighter and thinner, so that a weight of the battery module 10 can be reduced. Compared with a liquid cooling plate whose thickness is less than 1 mm, such a liquid cooling plate is less prone to deformation and is stronger.

Optionally, a thermally conductive pad is disposed between the liquid cooling plate and the plurality of battery cells 11. Alternatively, thermally conductive silicone or thermally conductive gel is filled between the liquid cooling plate and the plurality of battery cells 11. The thermally conductive pad is also referred to as a thermally conductive silicone sheet, thermally conductive silica gel pad, a thermally conductive silicone pad, or the like. The thermally conductive pad, the thermally conductive silicone, or the thermally conductive gel has good thermal conductivity, and can ensure good thermal contact between the liquid cooling plate and the battery cells 11, thereby improving a cooling effect and further prolonging a service life of the battery module. It should be noted that a combination of two or three materials of a thermally conductive pad, thermally conductive silicone, or thermally conductive gel may alternatively be used as a thermally conductive material between the liquid cooling plate and the plurality of battery cells 11.

Referring to FIG. 4, an embodiment of a power battery pack provided in this application includes:
at least one battery module 10 and a housing 20.

In this embodiment, there may be one or more battery modules 10. For a specific description of the battery module 10, refer to the battery module described above.

The housing 20 is configured to package the at least one battery module 10.

Optionally, the housing 20 includes a box 21 and a top cover 22. The box 21 and the top cover 22 may be in, but are not limited to, a snap-fit connection. It may be understood that the housing 20 in this application is not limited to the foregoing example, and may alternatively be another type of packaging structure.

In this way, the battery module 10 in the power battery pack can dissipate heat, and there is no need to dispose an additional liquid cooling plate at the bottom of the battery module 10. Therefore, a height of the power battery pack may be reduced, a weight of the power battery pack may be reduced, and energy density of the power battery pack may be improved.

It may be understood that the power battery pack may further include a protective circuit board, an insulation layer, and the like. For the protective circuit board, refer to the protective circuit board in the foregoing description, and details are not described herein. The insulation layer may be disposed at the top or bottom of the plurality of battery modules 10, and is configured to isolate the battery modules 10 from the housing 20, thereby avoiding a situation such as electric leakage. In this way, safety of the power battery pack can be improved.

The foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of this application.

## Claims

1. A battery module, comprising:
a plurality of battery cells and an enclosure frame structure for fastening the plurality of battery cells;
the enclosure frame structure comprises two side plates that are disposed opposite to each other and two end plates that are disposed opposite to each other, at least one of the side plates is a liquid cooling plate, and a difference between a maximum distance and a minimum distance from the liquid cooling plate to the plurality of battery cells is less than a preset threshold.

2. The battery module according to claim 1, wherein at least one liquid cooling channel is disposed in the liquid cooling plate, and the liquid cooling channel comprises a coolant inlet located at an upper portion of the liquid cooling plate and a coolant outlet located at a lower portion of the liquid cooling plate.

3. The battery module according to claim 1, wherein at least one liquid cooling channel is disposed in the liquid cooling plate, and a coolant inlet and a coolant outlet in the liquid cooling channel are located on a same horizontal plane.

4. The battery module according to claim 2 or 3, wherein the liquid cooling plate is made by using a single-sided blowing process.

5. The battery module according to claim 2 or 3, wherein the liquid cooling plate is made by using a stamping and welding process.

6. The battery module according to claim 4 or 5, wherein a thickness of the liquid cooling plate is 1 to 2 mm

7. The battery module according to claim 6, wherein the liquid cooling plate is an aluminum alloy plate.

8. The battery module according to any one of claims 1 to 7, wherein a thermally conductive pad is disposed between the liquid cooling plate and the plurality of battery cells.

9. The battery module according to any one of claims 1 to 7, wherein thermally conductive silicone or thermally conductive gel is filled between the liquid cooling plate and the plurality of battery cells.

10. The battery module according to any one of claims 1 to 7, wherein each of the side plates is fastened to the two adjacent end plates through welding, or each of the side plates is fastened to the two adjacent end plates through riveting.

11. A power battery pack, comprising:
at least one battery module and a housing, wherein
the battery module is the battery module according to any one of claims 1 to 10; and
the housing is configured to package the at least one battery module.

12. The power battery pack according to claim 11, wherein the housing comprises a box and a top cover.
